# EUROPÄISCHE PATENTSCHRIFT

(11) **EP 3 501 354 B1**
(45) Veröffentlichungstag und Bekanntmachung des Hinweises auf die Patenterteilung: **31.05.2023**
(21) Anmeldenummer: 18210601.3
(22) Anmeldetag: 06.12.2018
(51) Int. Cl.: A47J 42/02, A47J 42/38

(54) **GEWÜRZMÜHLENMAHLWERK**
SPICE MILL GRINDER
MOULIN À ÉPICES

(30) Priorität: 22.12.2017 DE 102017131111
(43) Veröffentlichungstag der Anmeldung: 26.06.2019
(73) Patentinhaber: Merschbrock Vermietung & Verpachtung GmbH & Co. KG, 33415 Verl (DE)
(72) Erfinder: Merschbrock, Uwe, 33415 Verl (DE)
(74) Vertreter: Rolf, Gudrun

(56) Entgegenhaltungen:
- DE-A1-102015 121 237
- FR-A1- 2 564 721
- FR-A1- 3 040 278
- US-A1- 2012 199 679

## Beschreibung

Die Erfindung betrifft ein Gewürzmühlenmahlwerk gemäß dem Oberbegriff des ersten Patentanspruches.

Bekannte Gewürzmühlen, DE 10 2015 121 237 A1, weisen Mühlenmahlwerke mit Gehäuseunterteilen mit darin festgelegten Mahlwerksaußenteilen und mit dagegen verdrehbaren Gehäuseoberteilen mit darin festgelegten kegelstumpfartigen Mahlwerksinnenteilen auf, wobei die Mahlwerksinnenteile auf ihren den Gehäuseoberteilen zugewandten Kegelstumpfgrundseiten mit ringartigen kreisrunden Stirnflächen ausgestattet sind.

Nachteilig an diesen bekannten Gewürzmühlen ist, dass diese kreisringartigen Stirnflächen der Mahlwerksinnenteile ein automatisiertes Erfassen und Ausrichten der Bauteile zur automatischen Montage wesentlich erschweren, da ein automatischer Innengreifer, der in mittige Ausnehmungen in den Mahlwerksinnenteilen eingreift, dort regelmäßig keine optimal für ihn ausgerichtete Angriffsflächen vorfindet.

Es ist eine Universal-Gewürzmühle mit einer Vorrichtung zur Verhinderung der Abnutzung von Zähnen und ein Verfahren zur Montage dieser Mühle in einer Haushaltsmühle bekannt, FR 2 564 721 A1, wobei diese bekannte Universal-Gewürzmühle keine mechanische Ausgestaltung oder Verfahrensschritte für ihre automatisierte Fertigung aufweist.

Weiterhin ist eine Vorrichtung zum Mahlen eines Würzmittels mittels einer Mühle und eine Mühle mit einer solchen Mahlvorrichtung bekannt, FR 3 040 278 A1, die ebenso, abgesehen vom konischen Mahlwerk, im Wesentlichen aus kreiszylindrischen Mahlwerksinnen- und -außenteilen besteht, die einen definierten mechanischen Zugriff einer Montagevorrichtung erschweren.

Das Gleiche gilt für eine bekannte einstellbare Mühle, US 2012/199679 A1, die zwar beabstandet von einer kreisringförmigen Stirnfläche ihres Mahlwerksinnenteils radial von dessen Mantelfläche vorstehende Laschen aufweist, die allerdings der formschlüssigen Drehverriegelung im Gehäuseoberteil dienen und keinerlei Hilfestellung bei einer Automatisierung des Herstellungsprozesses eines Gewürzmühlenmalwerkes liefern. Aufgabe der Erfindung ist es ein Gewürzmühlenmahlwerk zur Verfügung zu stellen, welches für einen vollautomatisierten Zusammenbau optimiert ausgebildet ist.

Die Lösung dieser Aufgabe ergibt sich in Verbindung mit den Merkmalen des Oberbegriffes erfindungsgemäß zusammen mit den technischen Merkmalen des kennzeichnenden Teils dadurch, dass die ringartige Stirnfläche mit mindestens zwei geraden Seitenflächen ausgestattet ist, die als Anschlagflächen zur Ausrichtung des Mahlwerkinnenteils am Ende einer Förderstrecke, wie etwa einer Transportrinne, ausgebildet sind.

Hierdurch wird erreicht, dass das Mahlwerksinnenteil bei der automatisierten Aufnahme von einem Greifarm eine korrekt vorbestimmte Position aufweist, sodass gleichzeitig auch die entsprechenden Kontaktflächen im Inneren des Mahlwerksinnenteils wiederkehrend exakt in einer gewünschten Ausrichtung positioniert sind.

Gemäß der Erfindung sind zwei gerade Seitenflächen als Flächenpaar einander parallel gegenüberliegend an der ringartigen Stirnfläche angeordnet, sodass das Mahlwerksinnenteil sich auf einer Förderstrecke mit diesen beiden geraden Seitenflächen seitlich an den Seitenwänden eine schmaler werdende Transportrinnen anlegen, wodurch das Mahlwerksinnenteil insgesamt ausgerichtet wird, sodass damit auch eine definierte Positionierung der Innenflächen gewährleistet ist, deren Lage zu den Seitenflächen bekannt ist.

Ein solches Mahlwerksinnenteil ist mit zwei, drei oder vier Flächenpaaren von geraden

Seitenflächen ausgestattet, welche regelmäßig versetzt am Umfang ausgebildet sind, sodass sich auf einer Förderstrecke befindliche Mahlwerksinnenteile nur noch um den Bruchteil ihrer Hochachse herum drehen müssen, um an den Seitenwänden einer Transportrinne ausgerichtet anliegen zu können, wodurch sich auch die mögliche Transportgeschwindigkeit und damit die Wirtschaftlichkeit des Herstellungsverfahrens weiter verbessert.

Das Mahlwerksinnenteil weist eine Innenausnehmung auf mit senkrecht zu seiner Drehachse angeordneten Innenflächen, die als Kontaktflächen für die automatische Entnahme ausgebildet sind und die gerade und parallel zu den als Flächenpaaren ausgebildeten Seitenflächen angeordnet sind, wodurch auch für das Mahlwerksinnenteil eine über seinen gesamten Umfang verteilt ausreichende Materialstärke sichergestellt ist, was einen positiven Effekt auf die Gesamtlebensdauer des damit ausgestatten Gewürzmühlenmahlwerks ausübt.

Vorteilhafte Ausgestaltungen des Gegenstandes der Erfindung ergeben sich mit und in Kombination aus den nachfolgenden Unteransprüchen.

Gemäß einer besonders vorteilhaften Ausgestaltung des Gegenstandes der Erfindung besteht zumindest das Mahlwerksinnenteil oder auch das Mahlwerksaußenteil aus einem keramischen Material, sodass das Gewürzmühlenmahlwerk insgesamt eine sehr hohe Lebensdauer und ein hervorragendes Mahlergebnis aufweist, ohne gesundheitsschädlichen Abrieb zu erzeugen.

Entsprechend einer anderen vorteilhaften Ausführungsform des erfinderischen Gewürzmühlenmahlwerks ist das Mahlwerksaußenteil und das Mahlwerksinnenteil komplett aus einem vollkommen gesundheitsunbedenklichen Kunststoffmaterial gefertigt, zumindest aber das Mahlwerksinnenteil alleine, wodurch sich die Produktionskosten des Gewürzmühlenmahlwerks weiter minimieren lassen.

Vorteilhaft ist ebenfalls eine weitere Ausführungsform des Gewürzmühlenmahlwerks mit seinem Mahlwerksaußenteil und seinem Mahlwerksinnenteils, zumindest aber des Mahlwerksinnenteils alleine, bei der diese bzw. dieses aus Metall oder Blech gefertigt ist, mittels dessen ebenfalls eine hohe Lebensdauer und optimale Qualität des Arbeitsergebnisses erzielt werden kann

Nachfolgend sind zwei Ausführungsbeispiele der Erfindung anhand von Zeichnungen näher beschrieben. Es zeigen:
- Fig. 1: eine Explosionsdarstellung eines keramischen Mahlwerks von schräg oben,
- Fig. 2: eine Explosionsdarstellung des keramischen Mahlwerks der Fig. 1 von schräg unten,
- Fig. 3: eine Explosionsdarstellung eine Kunststoffmahlwerkes von schräg oben, und
- Fig. 4: eine Explosionsdarstellung des Kunststoffmahlwerks der Fig. 3 von schräg unten.

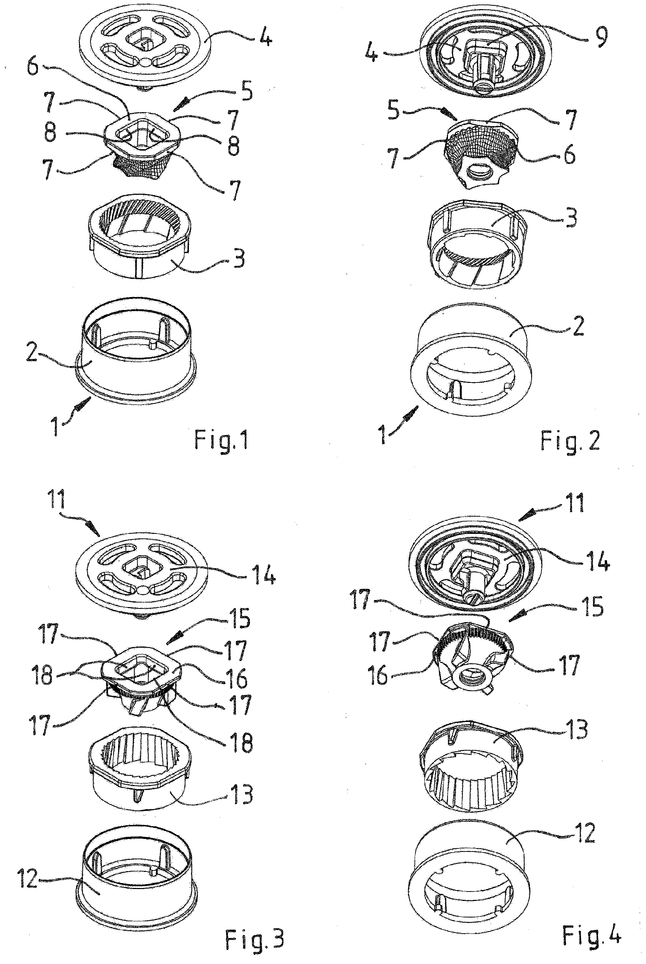

Das Gewürzmühlenmahlwerk 1; 11 besteht aus einem Gehäuseunterteil 2; 12 mit einem Mahlwerksaußenteil 3; 13 und aus einem dagegen verdrehbaren Gehäuseoberteil 4; 14 mit einem kegelstumpfartigen Mahlwerksinnenteil 5; 15, welches, wie in den Fig. 1 und 2 dargestellt, aus einem keramischen Material bestehen kann oder, wie in den Fig. 3 und 4 dargestellt, aus einem Kunststoffmaterial.

Das Mahlerwerksinnenteil 5; 15 ist auf seiner dem Gehäuseteil 4; 14 zugewandten Kegelstumpfgrundseite mit einer ringartigen Stirnfläche 6;16 ausgestattet, die mit vier geraden Seitenflächen 7; 17 bzw. zwei gegenüberliegenden Flächenpaaren von Seitenflächen 7; 17 ausgestattet ist, die als Anschlagflächen zur exakten Ausrichtung des Mahlwerksinnenteils 5; 15 am Ende einer Förderstrecke, wie etwa einer Transportrinne, ausgebildet sind.

Die vier geraden Seitenflächen 7; 17 sind hier in 90° Abständen regelmäßig versetzt zueinander über den Umfang der ringartigen Stirnfläche 6; 16 angeordnet und parallel dazu und senkrecht zu einer Drehachse des Gewürzmühlenmahlwerks 1; 11 in der Innenausnehmung des Mahlwerkinnenteils 5; 15 angeordnete Innenflächen 8; 18, die als Angriffsflächen für eine automatische Entnahme ausgebildet sind, und gerade und parallel zu den Seitenflächen 7; 17 verlaufen.

Die Innenflächen 8; 18 dienen ebenfalls als Kraftübertragungsflächen, wobei die Antriebsdrehmomente über entsprechende Kontaktflächen 9;19 des Gehäuseoberteils 4; 14 auf das Mahlwerksinnteil 5; 15 übertragen werden.

## Patentansprüche

1. Gewürzmühlenmahlwerk mit einem Gehäuseunterteil (2; 12) mit einem Mahlwerksaußenteil (3; 13) und mit einem dagegen verdrehbaren Gehäuseoberteil (4; 14) mit einem kegelstumpfartigen Mahlwerksinnenteil (5;15), das auf seiner dem Gehäuseoberteil (4; 14) zugewandten Kegelstumpfgrundseite mit einer ringartigen Stirnfläche (6;16) ausgestattet ist, wobei die ringartige Stirnfläche (6;16) mit mindestens zwei geraden Seitenflächen (7; 17) versehen ist, die als Anschlagflächen zur Ausrichtung des Mahlwerkinnenteils (5; 15) am Ende einer Förderstrecke, wie einer Transportrinne, ausgebildet sind, **dadurch gekennzeichnet, dass**
die zwei geraden Seitenflächen (7; 17) als Flächenpaar einander parallel gegenüberliegend an der ringartigen Stirnfläche (6; 16) angeordnet sind und zwei bis vier Flächenpaare von geraden Seitenflächen (7; 17) regelmäßig versetzt zueinander am Umfang der ringförmigen Stirnfläche (6; 16) ausgebildet sind und die ringartige Stirnfläche (6; 16) eine Innenausnehmung mit senkrecht zu einer Drehachse des Mahlwerks angeordneten Innenflächen (8; 18) aufweist, die gerade und parallel zu den Seitenflächen (7; 17) angeordnet sind.

2. Gewürzmühlenmahlwerk nach Anspruch 1, **dadurch gekennzeichnet, dass** zumindest das Mahlwerksinnenteil (5) aus einem keramischen Material besteht.

3. Gewürzmühlenmahlwerk nach Anspruch 1, **dadurch gekennzeichnet, dass** zumindest das Mahlwerksinnenteil (15) aus einem Kunststoffmaterial besteht.

4. Gewürzmühlenmahlwerk nach Anspruch 1, **dadurch gekennzeichnet, dass** zumindest das Mahlwerksinnenteil (15) aus Metall oder Blech besteht.

## Claims

1. A spice mill grinder comprising a housing lower part (2; 12) having a grinder outer part (3; 13), and comprising a housing upper part (4; 14) which can rotate counter thereto and has a frustoconical grinder inner part (5; 15) that is provided, on its truncated cone base facing the housing upper part (4; 14), with a ring-like end face (6; 16), the ring-like end face (6; 16) being provided with at least two straight side surfaces (7; 17) which are designed as stop surfaces for orienting the grinder inner part (5; 15) at the end of a conveying path such as a transport channel, **characterized in that**
the two straight side surfaces (7; 17) are arranged on the ring-like end face (6; 16) as a surface pair in parallel opposite one another, and two to four surface pairs of straight side surfaces (7; 17) are formed regularly offset to one another on the circumference of the ring-like end face (6; 16), and the ring-like end face (6; 16) has an inner recess having inner surfaces (8; 18) which are arranged perpendicularly to an axis of rotation of the grinder and are arranged straight and parallel to the side surfaces (7; 17).

2. The spice mill grinder according to claim 1, **characterized in that** at least the grinder inner part (5) consists of a ceramic material.

3. The spice mill grinder according to claim 1, **characterized in that** at least the grinder inner part (15) consists of a plastics material.

4. The spice mill grinder according to claim 1, **characterized in that** at least the grinder inner part (15) consists of metal or sheet metal.

## Revendications

1. Broyeur de moulin à épices comportant une partie inférieure de boîtier (2 ; 12) ayant une partie extérieure de broyeur (3 ; 13), et comportant une partie supérieure de boîtier (4 ; 14) pouvant tourner à l'opposé de la partie inférieure de boîtier et ayant une partie intérieure de broyeur (5 ; 15) tronconique qui est dotée, sur son côté de base de tronc conique tourné vers la partie supérieure de boîtier (4 ; 14), d'une surface frontale (6 ; 16) annulaire, la surface frontale (6 ; 16) annulaire étant pourvue d'au moins deux surfaces latérales (7 ; 17) rectilignes qui sont réalisées sous forme de surfaces de butée pour l'alignement de la partie intérieure de broyeur (5 ; 15) sur l'extrémité d'une ligne de transport, notamment une goulotte de transport, **caractérisé en ce que**
les deux surfaces latérales (7 ; 17) rectilignes sont agencées parallèlement l'une en face de l'autre sur la surface frontale (6 ; 16) annulaire, sous forme de paire de surfaces, deux à quatre paires de surfaces de surfaces latérales (7 ; 17) rectilignes sont réalisées en décalage mutuel régulier sur la circonférence de la surface frontale (6 ; 16) annulaire, et la surface frontale (6 ; 16) annulaire présente un évidement intérieur comportant des surfaces intérieures (8 ; 18) agencées perpendiculairement à un axe de rotation du broyeur, lesquelles surfaces intérieures sont agencées de manière rectiligne et parallèle par rapport aux surfaces latérales (7 ; 17) rectilignes.

2. Broyeur de moulin à épices selon la revendication 1, **caractérisé en ce qu'**au moins la partie intérieure de broyeur (5) est en un matériau céramique.

3. Broyeur de moulin à épices selon la revendication 1, **caractérisé en ce qu'**au moins la partie intérieure de broyeur (15) est en un matériau plastique.

4. Broyeur de moulin à épices selon la revendication 1, **caractérisé en ce qu'**au moins la partie intérieure de broyeur (15) est en métal ou en tôle.
